# EUROPEAN PATENT APPLICATION

(11) **EP 4 794 038 A1**
(43) Date of publication of application: **19.08.2026**
(21) Application number: 25736249.1
(22) Date of filing: 02.01.2025
(51) Int. Cl.: H01M 10/04, H01M 50/256, B65G 47/80, B65G 43/08, B65G 35/06

(54) **CYLINDRICAL SECONDARY BATTERY MANUFACTURING APPARATUS AND MANUFACTURING METHOD**

(30) Priority: 02.01.2024 KR 20240000172
(71) Applicant: LG Energy Solution, Ltd., Seoul 07335 (KR)
(72) Inventor: LEE, Sung Min, Daejeon 34122 (KR); CHAE, Seung Hun, Daejeon 34122 (KR); EOM, Chan Yong, Daejeon 34122 (KR); KWON, Jae Woo, Daejeon 34122 (KR)
(74) Representative: Goddar, Heinz J.
(86) International application number: PCT/KR2025/000033
(87) International publication number: WO 2025/147095

(57) **Abstract**

The present invention relates to a cylindrical secondary battery manufacturing device and a cylindrical secondary battery manufacturing method, which relates to a cylindrical secondary battery manufacturing device capable of effectively performing line balancing in a circulation manufacturing line.

According to one example of the present invention, it is possible to provide a cylindrical secondary battery manufacturing device and a cylindrical secondary battery manufacturing method, capable of automatically determining an appropriate quantity of carriers during circulation in a circulation manufacturing line through a master carrier distinguished from general carriers and a sensor sensing the master carrier.

## Description

### Technical Field

The present invention relates to a cylindrical secondary battery manufacturing device and a cylindrical secondary battery manufacturing method, which relates to a cylindrical secondary battery manufacturing device and a cylindrical secondary battery manufacturing method, capable of effectively performing line balancing in a circulation manufacturing line.

### Background Art

Generally, as the supply of portable small electrical and electronic devices is spread, development of new type secondary batteries such as nickel-metal hydride batteries or lithium secondary batteries is actively underway. Recently, lithium secondary batteries have been widely used for automobiles as well as power tools.

The lithium secondary battery means a battery using carbon such as graphite as a negative electrode active material, a lithium containing oxide as a positive electrode material, and a non-aqueous solvent as an electrolyte.

Such a secondary battery is manufactured in the form of a battery assembly by accommodating an electrode assembly, in which a positive electrode, a separator, and a negative electrode are sequentially measured, in an exterior material such as a pouch or a cylindrical can. Thereafter, a process of injecting the electrolyte into the battery assembly using an electrolyte injection device is performed. Depending on the shape of the exterior material, secondary batteries can be classified into pouch, cylindrical, and rectangular types.

Since the volume and weight of the exterior material in the pouch-type secondary battery are relatively small, there is an advantage that an energy density per volume is high. In addition, when a battery module is formed through pouch-type secondary batteries, it has a small void space, so that there is an advantage that an energy density per volume is high.

It can be regarded that cylindrical secondary batteries have an advantage of being manufactured faster than other types of secondary batteries, and cylindrical cans (exterior material) and caps can be manufactured using nickel-plated steel sheets, whereby they have an advantage of high durability and strength of the secondary batteries themselves.

The manufacturing process of the cylindrical secondary battery may comprise the following processes. First, a process of inserting an electrode assembly inside a cylindrical can may be performed. At this time, a negative electrode of the electrode assembly may be electrically connected to the can.

After the insertion process, a filling process may be performed in which an electrolyte is filled inside the cylindrical can. Thereafter, a casing process may be performed in which the positive electrode of the electrode assembly is connected to the cap, and then the cap is coupled with the cylindrical can.

In some cases, an outer periphery of the cylindrical secondary battery after completion of the casing process is contaminated with the electrolyte. Such an electrolyte may cause welding damage between the can and the cap or cause insulation failure. Therefore, a cleaning process is generally performed after the casing process is completed.

The cleaning process may comprise a washing process of cleaning the cylindrical secondary battery through a cleaning liquid, a blower process of removing the cleaning liquid remaining in the cylindrical secondary battery after the washing process through air drift, and a drying process of evaporating the cleaning liquid after the blower process.

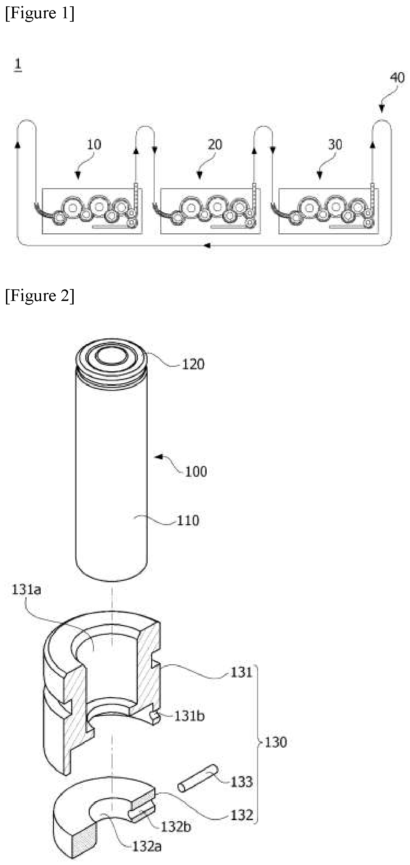

Figure 1 illustrates one example of a cylindrical secondary battery manufacturing device.

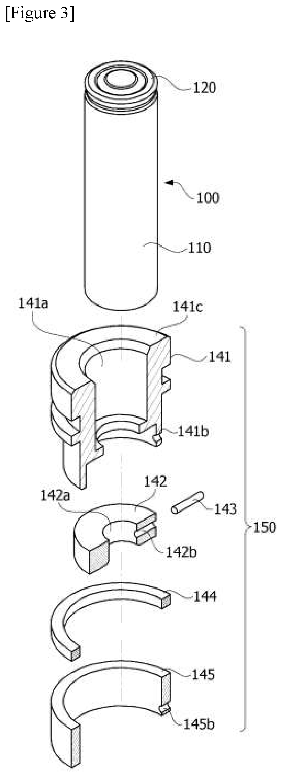

A plurality of process devices (10, 20, 30) is connected through a circulation manufacturing line (40). In a state where a cylindrical can or a cylindrical secondary battery is mounted on a carrier (see Figures 2 and 3), it is circulated while being transferred along a circulation manufacturing line. That is, each process device may be a partial constitution of a circulation manufacturing line.

The manufacturing device comprises first equipment (10), second equipment (20), and third equipment (30), where the first equipment may be washing equipment, the second equipment may be blower equipment, and the third equipment may be drying equipment. In addition, the first equipment may be insertion equipment, filling equipment, and casing equipment. That is, a plurality of continuous processes may be continuously performed through a single circulation manufacturing line (40).

The cylindrical can or cylindrical secondary battery is mounted on the carrier, and then fed into the initial equipment, i.e., the first equipment (10), and while the carrier, on which the cylindrical can or cylindrical secondary battery is mounted, sequentially passes through the equipment, the relevant processes may be performed. The cylindrical can or cylindrical secondary battery is separated from the carrier discharged from the last equipment, i.e., the third equipment (30). Then, the empty carrier may move further along the circulation manufacturing line (40) to accommodate the cylindrical can or cylindrical secondary battery, and then may be fed back into the initial equipment.

Here, the circulation manufacturing line (40) may be referred to as a closed path including each equipment (10, 20, 30), a buffer line (41) between the first equipment (10) and the second equipment (20), a buffer line (42) between the second equipment (20) and the third equipment (30), and a return line (43) between the third equipment (30) and the first equipment (10).

The buffer lines (41, 42) may be referred to as carrier transfer paths for input and waiting for the next process after the previous process is completed, and the return line (43) may be referred to as a carrier transfer path for empty carriers to be resupplied to the first equipment (10) after all processes are completed.

Therefore, in order that each process equipment performs the process with optimal efficiency, the process speed of another continuous process equipment must also be optimally controlled. That is, a manufacturing line balance or circulation line balance must be achieved. Such a balance requires that the quantity of carriers currently being circulated through the circulation manufacturing line must be optimally maintained.

However, as the manufacturing process is performed, some carriers may leave out of the circulation manufacturing line, and some cylindrical cans or secondary batteries may be sensed as defects to be forcibly discharged from the circulation manufacturing line together with the carriers. Therefore, due to the quantity lack of carriers in the circulation manufacturing line may be insufficient, line balancing may be broken, thereby causing a lot of waiting in a specific process facility. Of course, a worker can add carriers to the circulation manufacturing line, but rather, when the quantity of carriers is excessive, the line balancing may be broken, thereby causing a lot of waiting in a specific process facility.

Due to this problem, it is necessary to find a way capable of optimally managing and controlling the quantity of carriers in the circulation manufacturing line.

### Disclosure

### Technical Problem

It is an object of the present invention to solve the problems of the conventional cylindrical secondary battery manufacturing device.

Through one example of the present invention, it is intended to provide a secondary battery manufacturing device and a secondary battery manufacturing method capable of optimally managing and controlling a quantity of carriers introduced into a circulation manufacturing line.

Through one example of the present invention, it is intended to provide a secondary battery manufacturing device and a secondary battery manufacturing method capable of setting an optimal quantity of carriers, and easily identifying a shortage or excess of the quantity of carriers.

Through one example of the present invention, it is intended to provide a secondary battery manufacturing device and a secondary battery manufacturing method capable of efficient operation by preventing an increase of a waiting time before a process is performed as line balancing is maintained by maintaining optimization of a carrier quantity.

Through one example of the present invention, it is intended to provide a secondary battery manufacturing device and a secondary battery manufacturing method capable of easily optimizing a carrier quantity simultaneously with or during operation of the secondary battery manufacturing device.

### Technical Solution

In order to achieve the above-described objects, according to one example of the present invention, it is possible to provide, in a cylindrical secondary battery manufacturing device that a carrier, on which a cylindrical secondary battery is mounted, is transferred and circulated in a circulation manufacturing line to manufacture a cylindrical secondary battery, a cylindrical secondary battery manufacturing device capable of sensing general carriers and master carriers, which are distinguished from each other, to determine a quantity of carriers circulated through the circulation manufacturing line. That is, it is possible to provide a cylindrical secondary battery manufacturing device and a cylindrical secondary battery manufacturing method capable of automatically determining whether a quantity of carriers introduced into the manufacturing device is appropriate.

In order to achieve the above-described objects, according to one example of the present invention, it is possible to provide a cylindrical secondary battery manufacturing device that a carrier, on which a cylindrical secondary battery is mounted, is transferred and circulated in a circulation manufacturing line to manufacture a cylindrical secondary battery, wherein the cylindrical secondary battery manufacturing device is characterized by comprising: a plurality of general carriers introduced into the circulation manufacturing line; a master carrier distinguished from the general carriers and introduced into the circulation manufacturing line; a sensor provided at a specific position of the circulation manufacturing line to sense the master carrier; a positioner provided at a specific position of the circulation manufacturing line and sensing the general carrier to generate a signal; and a controller counting a quantity of general carriers circulating in the circulation manufacturing line based on the signal generated by the positioner in one cycle from sensing of the master carrier through the sensor to sensing of a next master carrier.

One master carrier may be introduced in the circulation manufacturing line.

An interface for inputting an appropriate quantity of carriers circulating in the circulation manufacturing line may be provided.

It may comprise an alarm generating a notification when the quantity of the counted carriers escapes from the appropriate quantity and a preset error. Of course, the interface may indicate the quantity of calculated carriers per cycle.

It may comprise an alarm generating a notification when the sensor does not sense the master carrier for a preset time. That is, it may be determined that the master carrier is abnormally separated from the circulation manufacturing line.

The general carrier and the master carrier may have the same shape and size, but may be formed to be visually distinguished.

At least a portion of an outer periphery of the master carrier may be formed of a conductive material that an electrical current is conducted upon contact with the sensor. Therefore, the sensor may sense only whether the master carrier is in contact without sensing whether the general carrier is in contact.

It may comprise process equipment performing a specific process, and the circulation manufacturing line may comprise an input buffer line in which the input and waiting of carriers introduced into the process equipment are performed, and a discharge buffer line in which the discharge and waiting of carriers discharged from the process equipment are performed.

It is preferable that the sensor is provided near the input buffer line.

A defect discharge outlet may be provided, through which defective secondary batteries are discharged before the carrier is discharged through the discharge buffer line. The defect discharge outlet may be provided so that the carrier is discharged out of the circulation manufacturing line. It is preferable that the defect discharge outlet is provided with an auxiliary sensor sensing the master carrier. Of course, the defect discharge outlet may be provided with a positioner sensing the carrier.

The process equipment may be provided in multiple units, and the input buffer line and the discharge buffer line may be provided between the process equipment and the process equipment.

Among the plurality of process equipment, a return line may be provided between the input buffer line of the first process equipment and the output buffer line of the last process equipment, whereby the carrier may be circulated through the entire circulation manufacturing line.

It is preferable that the sensor and the positioner are provided in the last process equipment.

The plurality of process equipment may comprise washing equipment, blower equipment, and drying equipment.

In order to achieve the above-described objects, according to one example of the present invention, it is possible to provide a cylindrical secondary battery manufacturing device that a carrier, on which a cylindrical secondary battery is mounted, is transferred and circulated in a circulation manufacturing line to manufacture a cylindrical secondary battery, wherein the cylindrical secondary battery manufacturing device is characterized by comprising: a positioner sensing a general carrier among a plurality of carriers introduced into the circulation manufacturing line to generate a signal; a sensor sensing a master carrier among the plurality of carriers introduced into the circulation manufacturing line; and a controller counting a quantity of general carriers circulating in the circulation manufacturing line through the positioner in one cycle from sensing of the master carrier through the sensor to sensing of a next master carrier, and determining whether the quantity of carriers circulating in the circulation manufacturing line is appropriate.

It is preferable that the master carrier has the same shape and size as those of the general carrier, but is visually and materially distinct therefrom.

One master carrier may be introduced in the circulation manufacturing line.

It is preferable that an auxiliary sensor is provided, which senses that the master carrier is discharged to a defect discharge outlet, through which defective secondary batteries are discharged, out of the circulation manufacturing line.

It is preferable that the manufacturing device further comprises: an interface for inputting an appropriate quantity of carriers circulating in the circulation manufacturing line; and an alarm device generating a notification when the quantity of the counted carriers is out of a preset error from the appropriate quantity.

In order to achieve the above-described objects, according to one example of the present invention, it is possible to provide a cylindrical secondary battery manufacturing method comprising: a step of sensing a master carrier in a circulation manufacturing line through a sensor to start one cycle; a step of sensing and counting carriers in the circulation manufacturing line through a positioner; a step of re-sensing the master carrier in the circulation manufacturing line to end one cycle, and determining whether the quantity of carriers counted per cycle is appropriate; and a notification step performed when the quantity of carriers is abnormal.

One master carrier may be provided in the circulation manufacturing line, and the cycle in which the master carrier circulates the circulation manufacturing line once may be referred to as one cycle. To easily set or define one cycle, a time interval from sensing of the master carrier to re-sensing may be referred to as one cycle. In addition to the master carrier, a plurality of carriers may be provided in the circulation manufacturing line. The sum of the quantity of master carriers and the quantity of general carriers may be referred to as the sum of the total carriers.

A carrier may be separated from the circulation manufacturing line for various reasons. Due to the separation of the carrier, the quantity of carriers inputted in the circulation manufacturing line may become inappropriate. In this example, such inappropriateness is automatically determined, whereby it is possible to notify a worker that additional input of carriers is required.

Specifically, according to this example, it is preferable that a step of counting the quantity of carriers discharged out of the circulation manufacturing line through an auxiliary positioner is included, and the quantity of carriers counted per cycle is calculated by deducting the quantity of the discharged carriers.

Specifically, according to this example, it may comprise a step of sensing the master carrier discharged out of the circulation manufacturing line through an auxiliary sensor and performing a notification.

It is preferable that when the master carrier is not re-sensed within a preset time in the circulation manufacturing line, a step of performing a separation notification of the master carrier is included.

### Advantageous Effects

Through one example of the present invention, it is intended to provide a secondary battery manufacturing device and a secondary battery manufacturing method capable of optimally managing and controlling a quantity of carriers introduced into a circulation manufacturing line.

Through one example of the present invention, it is intended to provide a secondary battery manufacturing device and a secondary battery manufacturing method capable of setting an optimal quantity of carriers, and easily identifying a shortage or excess of the quantity of carriers.

Through one example of the present invention, it is intended to provide a secondary battery manufacturing device and a secondary battery manufacturing method capable of efficient operation by preventing an increase of a waiting time before a process is performed as line balancing is maintained by maintaining optimization of a carrier quantity.

Through one example of the present invention, it is intended to provide a secondary battery manufacturing device and a secondary battery manufacturing method capable of easily optimizing a carrier quantity simultaneously with or during operation of the secondary battery manufacturing device.

### Description of Drawings

Figure 1 illustrates an arrangement appearance of a conventional cylindrical secondary battery manufacturing device,
Figure 2 illustrates a disassembled appearance (before assembly) of a general carrier and a cylindrical secondary battery,
Figure 3 illustrates a disassembled appearance (before assembly) of a master carrier and a cylindrical secondary battery,
Figure 4 illustrates an arrangement appearance of a cylindrical secondary battery manufacturing device according to one example of the present invention,
Figure 5 illustrates mounting positions of a sensor assembly and an auxiliary sensor assembly in a reference facility of a cylindrical secondary battery manufacturing device,
Figure 6 illustrates a contact appearance of a carrier and a sensor assembly,
Figure 7 illustrates a contact appearance of a carrier and an auxiliary sensor assembly,

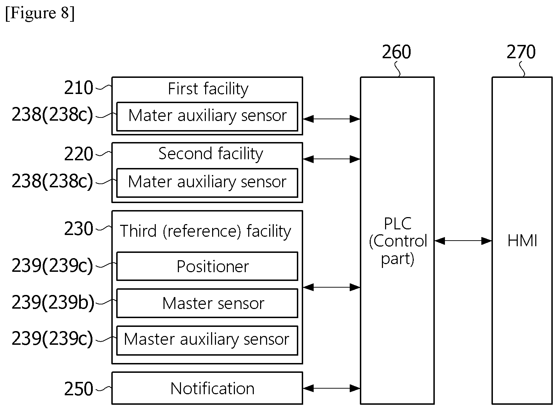

Figure 8 illustrates a control constitution of a cylindrical secondary battery manufacturing device according to one example of the present invention, and
Figure 9 illustrates a control flow of a cylindrical secondary battery manufacturing device according to one example of the present invention.

### Best Mode

Hereinafter, with reference to the attached drawings, a cylindrical secondary battery manufacturing device according to one example of the present invention will be described in detail.

First, a carrier applicable to one example of the present invention will be described in detail with reference to Figures 2 and 3.

As shown in Figure 2, the battery (100) comprises a cylindrical case (110) and a cap (120), and the central portion of the cap (120) forms a positive electrode and the central portion of the lower surface of the case forms a negative electrode. Figure 2 illustrates a central cross-section of the carrier (130).

The cylindrical case (110) or the battery (100) can be fed into and discharged from process facilities in a state where it is partially accommodated in the carrier (130). When all processes are completed, the battery (100) is separated from the carrier (130).

The carrier (130) may be formed as a single carrier by assembling a plurality of parts. For example, a main body (131), a lower body (132), and a coupling pin (133) may be assembled to each other to form a single carrier. The carrier (130) may be formed in a hollow cylinder shape.

An insertion groove (131a) into which a cylindrical case or battery is inserted may be formed on the upper part of the carrier (130), and a fluid inlet (132a) may be formed on the lower part. The insertion groove (131a) may be formed at a certain depth from the upper part of the carrier (130). The diameter of the insertion groove (13) may be formed to be slightly larger than the diameter of the battery (100). The lower part of the battery (10) may be inserted into the insertion groove (131a) at a certain depth, and the insertion depth may be 1/5 to 1/3 or so of the length of the battery (100). The case (110) or the battery (10) is transferred along a circulation manufacturing line in a state where it is mounted on the carrier (130), i.e., in an upright state.

The fluid inlet (132a) may be formed to be connected from the lower part of the carrier (130) to the insertion groove (131a), and the diameter of the fluid inlet (132a) may be formed smaller than the diameter of the insertion groove (131a) and the battery diameter. Through the fluid inlet, the cleaning liquid or air may be supplied and discharged from the outside to the case (110).

The carrier (130) may be formed entirely of an insulating material. It may be formed of a rubber material to protect the case or the battery during the transfer process. Particularly, the main body (131) and the lower body (132) may be formed of an insulating material, and may be formed of the same material. The coupling pin (133) may be a spring pin, and through-holes (131b, 132b) for inserting and fixing the coupling pin (133) may be formed in the main body (131) and the lower body (132), respectively.

Figure 3 illustrates a master carrier (140), where particularly, the central cross-section of the master carrier (140) is illustrated. The carrier illustrated in Figure 2 may be referred to as a general carrier, to distinguish it from the master carrier. That is, the carriers may comprise a general carrier and a master carrier.

The cylindrical case (110) or battery (100) may be fed into and discharged from process facilities in a state where a part thereof is accommodated in the master carrier (140). If all processes are completed, the battery (100) is separated from the master carrier (140).

The master carrier (140) may be formed into a single carrier as multiple parts are assembled. As one example, it may comprise a main body (141), a lower body (142), and a coupling pin (143), and may further comprise an outer ring (144) and a fixing ring (145), and these parts may be assembled to each other, and formed into a single carrier. The master carrier (140) may be formed in a hollow cylinder type.

An insertion groove (141a) into which a cylindrical case or battery is inserted may be formed on the upper part of the master carrier (140), and a fluid inlet (142a) may be formed on the lower part. The insertion groove (141a) may be formed at a certain depth from the upper part of the carrier (140).

The fluid inlet (142a) may be formed to be connected from the lower part of the carrier (140) to the insertion groove (141a), and the diameter of the fluid inlet (142a) may be formed smaller than the diameter of the insertion groove (141a) and the battery diameter. Through the fluid inlet, the cleaning liquid or air may be supplied and discharged from the outside to the case (110).

The carrier (140) may be formed entirely of an insulating material. It may be formed of a rubber material to protect the case or the battery during the transfer process. Particularly, the main body (141), the lower body (142), and the fixing ring (145) may be formed of an insulating material, and may be formed of the same material. The coupling pin (143) may be a spring pin, and through-holes (141b, 142b, 145b) for inserting and fixing the coupling pin (133) may be formed in the main body (141), the lower body (142), and the fixing ring (145), respectively.

As shown in Figures 2 and 3, the general carrier and the master carrier may have the same shape and size. However, they may be formed to be visually distinguished. As one example, they may be distinguished by differences in the colors of the whole or part, differences in words, or differences in the presence or absence of the words. Specifically, the words indicating the master carrier may be engraved on the upper surface (141c) of the master carrier (140).

Meanwhile, the master carrier may comprise an outer ring (144), where the outer ring may be formed of a conductive material, unlike other parts. For example, it may be formed of a stainless-steel material. The outer ring (144) is inserted into the lower part of the main body (141), and then the fixing ring (145) of the main body is inserted into the lower part of the main body (141). Since the fixing ring (145) is fixed to the main body (141) through the coupling pin (143), the outer ring (144) may be fixed to the main body (141).

Of course, the general carrier and the master carrier may also have different shapes or detailed constitutions from those shown, but it is preferable that a detailed constitution capable of distinguishing between both carriers through the sensor is arranged. In this example, the general carrier and the master carrier may be distinguished and sensed by the sensor through the presence or absence of the outer ring (144). As one example, the sensor may be fixedly mounted at a specific location to sense only the master carrier among the general carrier and the master carrier which are transferred. A detailed description thereof will be described below.

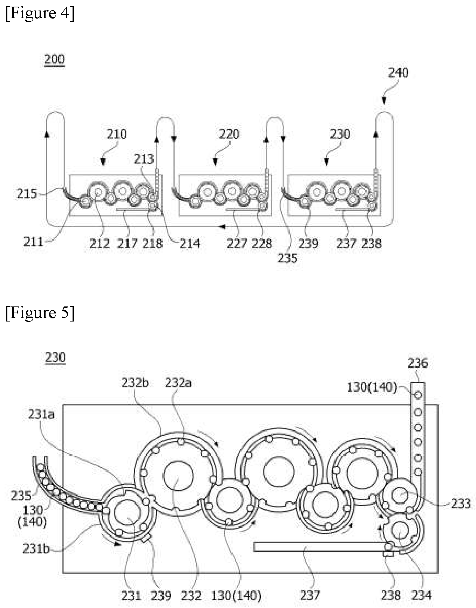

Hereinafter, a cylindrical secondary battery manufacturing device according to one example of the present invention will be described in detail with reference to Figure 4.

As illustrated, a cylindrical secondary battery manufacturing device according to one example of the present invention may be identical to or like the conventional manufacturing device illustrated in Figure 1. However, according to the present example, the line balance may be effectively performed through addition of some constitutions and addition of some control logics.

According to the present example, the first equipment (210), the second equipment (220), and the third equipment (230) are connected in series so that the respective processes may be performed in series. Each equipment may constitute a part of one circulation manufacturing line (240).

Here, each equipment may be equipment performing the same process. For example, the first equipment (210) is cleaning equipment, which may perform a washing process, a blower process, and a drying process of a cylindrical secondary battery. The secondary battery cleaned through the first equipment (210) may be repeatedly cleaned through the second equipment (220) and the third equipment (230). As one example, three cleaning processes may be performed continuously.

Of course, each equipment may be equipment performing different processes. As one example, the first equipment (210) is washing equipment, which may perform a washing process, the second equipment (220) is blower equipment, which may perform a blower process, and the third equipment (230) is a drying equipment, which may also perform a drying process.

Meanwhile, multiple detailed equipment forming the circulation manufacturing line (240) may be provided, and two detailed equipment may form one circulation manufacturing line (240), or four or more detailed equipment may form one circulation manufacturing line (240).

According to the present example, the carriers may be used by dividing them into a general carrier and a master carrier.

The master carrier (140) is distinguished from the general carrier (150), but may perform the carrier's unique functions, that is, accommodation and transfer functions of the battery.

The secondary battery manufacturing device (200) may comprise a sensor assembly (239). The sensor assembly (239) may be provided to sense the master carrier (140).

The sensor assembly (239) may be provided at a specific location on the continuous circulation path of the circulation manufacturing line (240). Here, the specific location may be the initial input location of the carrier in the manufacturing device (200) or its vicinity. When the manufacturing device (200) is connected to a plurality of equipment, the specific location may be the vicinity of the input buffer line (235) of the last equipment, as one example, the third equipment (230), or the location where the process of the third equipment (230) begins.

The master carrier moves in a circular manner along the circulation manufacturing line (240) unless there is a special case. Therefore, the period between the time when the sensor assembly (239) senses the master carrier and the time when the master carrier is re-sensed may be referred to as one cycle of the manufacturing device. Here, when one master carrier (140) is input to the manufacturing device, one cycle means the period during which all carriers (130, 140) move along the circulation manufacturing line (240) and then return to their original positions.

As one example, the first equipment (210) may comprise a plurality of process wheels (212), a plurality of input wheels (211), and a discharge wheel (213). The carrier (130, 140) transferred to the initial input wheel (211) through the input buffer line (215) is moved to the process wheel (211) as the input wheel (211) rotates. In this instance, the process wheel (211) also rotates.

The input wheel (211) is provided between the process wheel (212) and the process wheel (212), and plays a role in inputting the carrier discharged from the previous process wheel (212) to the next process wheel (212). In Figure 4, three input wheels (212) and three process wheels (212) are illustrated as one example. As each process wheel (212) rotates, the relevant process may be performed.

The carrier (130, 140) discharged from the last process wheel is moved to the discharge buffer line (216) through the discharge wheel (213), and then moved to the next equipment.

Meanwhile, a defective secondary battery may be sensed during the process of performing the process through the first equipment (210), and the defective secondary battery may be discharged out of the circulation manufacturing line (240) to the discharge line (217) or the defect discharge outlet. Through operation of a defect wheel (214) connected to the discharge wheel (213), the defective secondary battery may be discharged to the defect discharge outlet together with the carrier.

According to the present example, the defect discharge outlet or defect discharge lines (217, 227, 228) of each equipment (210, 220, 230) may be provided with an auxiliary sensor assembly (218, 228, 238) capable of sensing the discharged master carrier (140).

The auxiliary sensor assembly may be provided with the same structure as the above-described sensor assembly. In addition, the auxiliary sensor assembly may be provided to perform the same function as the above-described sensor assembly. However, the auxiliary sensor assembly and the sensor assembly may differ only in their mounting positions. For this reason, the purposes for sensing the master carrier through the auxiliary sensor assembly and the sensor assembly may be different from each other.

As described above, in a normal case, as one example, when the master carrier (140) continuously circulates along the circulation manufacturing line, i.e., when the cycle is repeated, the sensor assembly (239) may have the purpose for checking the cycle and checking the quantity of general carriers (130) per cycle, as described below. In an abnormal case, as one example, when the case or battery accommodated by the master carrier (140) is defective, the master carrier (140) is discharged through the defect discharge outlet. Therefore, the master carrier does not exist on the circulation manufacturing line (240). In this case, the auxiliary sensor assembly is required to sense the absence of the master carrier.

Hereinafter, with reference to Figure 5, the mounting positions of the sensor assembly (239) and the auxiliary sensor assembly (238) through the final equipment of the manufacturing device (200), that is, the third equipment (230), will be described in more detail. The detailed mechanisms and constitutions to be described may be the same or like the first equipment and the second equipment. Here, the final equipment may be referred to as the reference equipment. This is because the definition and completion of one cycle may be sensed and determined through the reference equipment, and moreover, the quantity of carriers used in one cycle or the quantity of carriers normally circulating in the circulation manufacturing line (240) may be determined through this.

A plurality of input wheels (231), a plurality of process wheels (232), a discharge wheel (233), and a defect wheel (234) are provided, and a wheel housing (231b, 232b, 233b, 234b) surrounding at least a portion of each wheel is provided. Each wheel rotates based on the center of the housing and performs each role. Each wheel is formed with a plurality of grooves (231a, 232a, 233a, 234a) or slots (231a, 232a, 233a, 234a), and carriers (130, 140) are inserted between the housing and the slots, whereby the carriers (130, 140) move. That is, the carrier moves as the wheel rotates. The relevant process may be performed through this carrier movement process.

It is preferable that the sensor assembly (239) is provided in the vicinity of the initial input wheel (231) of the reference equipment (230), more specifically, in the wheel housing (231b). That is, it is preferable that the sensor assembly (239) is not mounted on another equipment (210, 220). It is preferable that the sensor assembly (239) is provided only in one specific location of the circulation manufacturing line (240).

Since each equipment (210, 220, 230) is provided with a defect discharge outlet (217, 227, 237), it is preferable that the defect discharge outlet (237) of the reference equipment (230) is also provided with the auxiliary sensor assembly (238).

Here, the sensor assembly (239) may be provided to perform at least two functions. As one example, it may perform a function as the sensor sensing the master carrier (240). This sensor may be a vision, but may be a contact sensor for immediate sensing.

As described above, unlike the general carrier (130), an outer periphery of the master carrier (140) is provided with a conductive material. When the contact sensor is in contact with the conductive material, it can be known that the master carrier (140) is sensed by generating a specific signal. On the other hand, when the general carrier (130) is in contact with the contact sensor, the contact sensor may not generate a signal. Therefore, when one master carrier (140) is introduced into the circulation manufacturing line (140), the period between sensing of the master carrier and the re-sensing may be referred to as one cycle.

Here, a means capable of sensing the quantity of carriers circulated in one cycle may be required. The quantity of carriers may also be the quantity of general carriers, and may also be the quantity in which the quantity of one master carrier is added to the quantity of general carriers. The sensor assembly (239) may be provided for this quantity counting of carriers.

Specifically, the sensor assembly (239) may perform a function of a positioner generating a specific signal upon contact with a carrier (130, 140). As one example, it may be a positioner converting a physical change by contact into an electrical signal to output it. As one example, it may be a cam positioner.

Through sensing and re-sensing of the master carrier through the contact sensor, one cycle is defined and determined, and it is possible to count the quantity of carriers per cycle through the positioner. As a result, it is possible to determine whether the quantity of carriers per cycle is appropriate.

Meanwhile, the master carrier may be discharged through the defect discharge outlet and may be separated from the circulation manufacturing line (240). In this case, it is impossible to determine whether one cycle is performed, and as a result, the quantity of carriers per cycle cannot be counted. Therefore, it is preferable that it may determine whether the master carrier has been separated from the circulation manufacturing line (240). To this end, an auxiliary sensor assembly (238) identical to or like the sensor assembly (239) may be provided.

The auxiliary sensor assembly (238) is located near the defect discharge outlet (239) to sense the discharged master carrier (140). When the master carrier (140) is sensed in the auxiliary sensor assembly (238), the master carrier (140) is absent in the circulation manufacturing line (240), so that a notification may be generated, as described below.

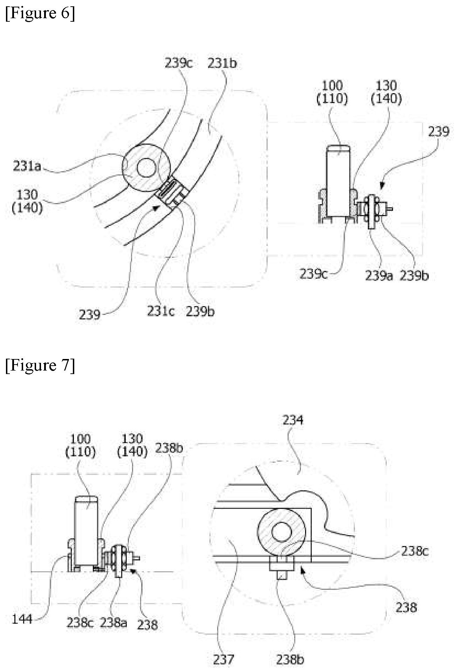

Hereinafter, the sensor assembly (239) and the auxiliary sensor assembly (238) will be described in more detail through Figures 6 and 7.

Figure 6 illustrates a mounting position and a contact structure of a sensor assembly (239).

The carrier (130, 140) is inserted into the slot (231a) of the input wheel, thereby moving while sliding or rolling along the housing (231b) as the input wheel rotates.

The sensor assembly (239) may comprise a contact sensor (239c), where the contact sensor (239c) is repeatedly in contact with the carrier (130, 140) in a fixed state. Here, since the master carrier (140) has a conductive outer periphery, the contact sensor (239c) may generate a detection signal of the master carrier (140) through conduction. On the other hand, the general carrier (130) may not need to be sensed.

The sensor assembly (239) may comprise a positioner (239b), where the positioner (239b) repeatedly contacts the carrier (130, 140) directly or indirectly in a fixed state. Through a constitution which physically changes by contact, such as an unillustrated cam, the positioner (239b) may generate the relevant signal whenever the carrier (130, 140) is in contact. Here, the positioner (239b) generates the relevant signal based on physical displacement or rotational displacement, so that the signal may be generated upon contact without distinguishing the mater carrier from the general carriers. The number of such contact signals is counted, and the quantity of carriers per cycle may be calculated through this.

Here, it is also possible to configure the contact sensor (239c) and the positioner (239b) separately rather than as one assembly, thereby positioning and mounting them individually. However, for accurate calculation of the quantity of carriers per cycle and easy installation, it is preferable to implement them as one assembly. The sensor assembly (230) may comprise a sensor mount (239a) for mounting and fixing the contact sensor (239c) and the positioner (239b).

Figure 7 illustrates a mounting position and a contact structure of an auxiliary sensor assembly (238). The auxiliary sensor assembly (238) may have the same structure as the sensor assembly (239), but only the mounting position may be different.

That is, since the auxiliary sensor assembly (238) is provided to sense the master carrier (140) discharged together with the defective battery from the defect discharge wheel (234), it is preferable to be provided near the entrance of the defect discharge outlet or the defect discharge line. Therefore, the auxiliary sensor assembly (238) may comprise a contact sensor (238c) generating a signal upon contact with a conductive material. That is, it may sense that the master carrier is discharged by sensing contact with the outer ring (144) of the master carrier (140).

Here, the auxiliary sensor assembly (238) may also sense the discharged carrier without distinguishing the master carrier from the general carriers. That is, like the sensor assembly (239), the auxiliary sensor assembly (238) may also comprise a positioner (238c). In addition, it may also comprise a sensor mount (238a). By counting the contact signal sensed through the positioner (238c), the quantity of carriers discharged from the circulation manufacturing line (240) may be calculated. Of course, in this case, it is preferable that the total quantity of carriers discharged as defects from each equipment (210, 220, 230) is counted.

Through this defect counting, the quantity of carriers discharged as defects per cycle or the number of defective batteries may be calculated. Such calculation results may be used for checking the yield of the manufacturing device or checking the quantity of carriers to be additionally input.

Hereinafter, the control constitution of the manufacturing device (200) will be described in detail.

The master carrier is sensed through the sensor assembly (239) or the contact sensor (239c), which is preferably provided only in the reference facility (230). Therefore, the contact sensor (239c) herein is a sensor for defining and confirming one cycle, so that it may be called a master sensor. Of course, the reference facility (230) is provided with a contact sensor (239c) sensing the defect discharge of the master carrier, which may be called a master auxiliary sensor distinct from the master sensor.

The sensor assembly (239) of the reference facility (230) comprise a positioner (239c), and generates a signal whenever a carrier is in contact through the positioner (239c).

Other facilities (210, 220) other than the reference facility are each provided with an auxiliary sensor assembly (218), where the auxiliary sensor assembly (218, 228) may comprise a master auxiliary sensor (218c, 228c).

The control part or controller (260) may be implemented in the form of a PLC (programmable logic controller), and the controller (260) receives signals through the contact sensors (239c, 238c), and receives signals through the positioner (239c). Based on these signals, the controller (260) determines whether one cycle is performed, and furthermore calculates the quantity of carriers per one cycle. That is, the carrier quantity is calculated by counting signals in the controller (260).

The interface (270) may be implemented in the form of an HMI (human machine interface), and indication of various operation information in the device (200), and input of operation variables may be performed through the interface (270).

Specifically, a worker may input the appropriate quantity of carriers per cycle through the interface (270). That is, the worker may input the quantity in which the manufacturing device (200) can be operated at an optimal efficiency. At this time, the worker may also input an allowable error range.

The controller (260) may compare the calculated carrier quantity with the input carrier quantity. The controller (260) may determine whether the calculated carrier quantity is out of the allowable error range. At this time, it may determine whether the quantity deviates as exceedance or the quantity deviates as deficiency. That is, when the carrier quantity is determined to be abnormal, the worker may be notified of the same through the alarm device (250). The alarm (250) may be performed audibly or visually. A notification device such as a beeper or buzzer may be provided, and a notification device such as an oval lamp on site may be provided. Here, the notification may also be performed through the interface (270). Of course, it would be preferable for the interface (270) and the alarm device (250) to perform the notification in parallel.

The worker may check the quantity deficiency and exceedance of the carriers through the notification, and may easily perform the replenishment or removal of the carriers.

The controller (260) may check that the master carrier is separated from the circulation manufacturing line (240) through the signal of the master auxiliary sensor (218c, 228c, 238c). In this case, the controller (260) may provide the worker with an alarm through the alarm device (250). Of course, it may also provide the worker with the alarm through the interface (270).

The worker may check the separation of the master carrier through the alarm, and further input the master carrier into the circulation manufacturing line (240).

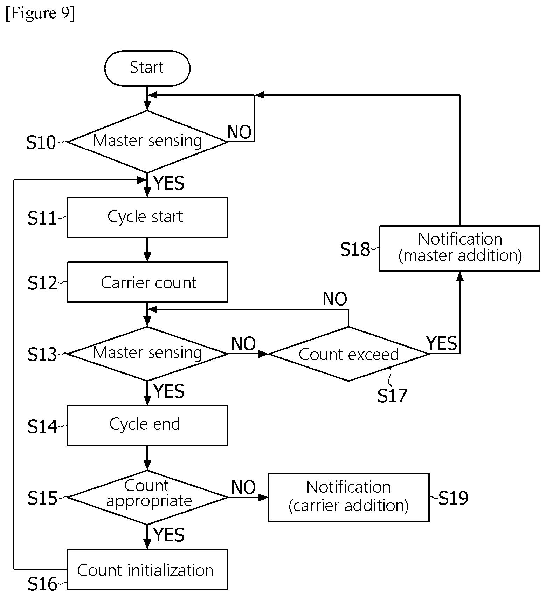

Hereinafter, a control method of the manufacturing device (200) according to one example of the present invention will be described in detail with reference to Figure 9.

The manufacturing device (200) performs the relevant process while operating. The assembly process or cleaning process of the cylindrical secondary battery may be performed. The assembly process or cleaning process may be divided into multiple sub-processes, and each sub-process may be performed through each sub-equipment.

The manufacturing device (200) may be continuously connected and circulated through a single circulation manufacturing line, and while the carrier circulates along the circulation manufacturing line, the manufacturing of the mounted secondary battery may be performed.

When the manufacturing device (200) starts operation, sensing (S10) of the master carrier may be performed. When the sensing (S10) of the master carrier is performed for the first time, it may be determined that it is a cycle start time (S11). That is, it may be determined that it is the cycle start. This sensing (S10) of the master carrier is performed through the contact sensor (238c), and the detection signal is transmitted to the controller (260), whereby it may be determined in the controller (260) that it is the cycle start.

When the cycle starts, the contact signal of each carrier is sensed, whereby the quantity count (S12) of the carriers is performed. The contact signal of the positioner (238b) is transmitted to the controller (260), so that the quantity count may be performed. This quantity count may be performed continuously.

When the master carrier finishes the circulation and circulates again, the master carrier is re-sensed (S13). Here, the master carrier sensing means the end time point of one cycle. That is, when the master carrier is re-sensed, the controller (260) determines the end of one cycle (S14), and determines whether the count is appropriate (S15).

That is, by comparing the quantity of carriers counted during one cycle with the preset quantity of carriers, it is determined whether it is appropriate. If it is more than or less than the preset error range, a notification (S19) may be performed. Through the notification at this time, the worker may remove or add carriers. When the quantity of counted carriers is appropriate, the count is initialized (S16) and the cycle is restarted (S11). That is, the re-sensing time point of the master carrier may be set as the start point of a new cycle, and the time point when the master carrier is re-sensed again may be determined as the end point of the new cycle.

Since it is determined whether the carrier quantity is appropriate whenever the cycle is repeated, it becomes possible to control and manage the quantity of carriers very effectively and efficiently.

Meanwhile, the master carrier may be separated from the circulation manufacturing line by falling, and the like. That is, it may abnormally be separated from the circulation manufacturing line. In this case, sensing of the master carrier, especially re-sensing (S13), becomes impossible. To prevent this problem, an expected period for one cycle may be preset. The expected period may be set to two cycle periods considering the average period of one cycle.

If the master carrier is not sensed in the re-sensing (S13) of the master carrier, the determination (S17) on whether the count is exceeded may be performed. When the count is not exceeded, one cycle is in progress, so that the re-sensing (S13) may be performed repeatedly.

When the master carrier is not sensed and the count is exceeded, especially when the master carrier is not sensed until the expectation is exceeded, it is determined as separation of the master carrier, whereby a notification (S18) may be performed. The worker may input the master carrier into the circulation manufacturing line through this alarm. The sensing of the master carrier after the notification time at this time may be called sensing (S10) for the start of the cycle.

In addition, the master carrier may be separated from the circulation manufacturing line during the process of discharging the defective battery. This separation of the master carrier occurs after the initial sensing of the master carrier, that is, the start of the cycle. Therefore, in a step of determining count exceedance without re-sensing the master carrier (S17) in the re-sensing of the master carrier (S13), sensing of the master carrier through the contact sensor (218c, 228c, 238c) may be performed.

That is, if the defect discharge of the master carrier is sensed in the case where the count is not exceeded, a notification (S18) requesting the addition of the master carrier may be performed as well.

Through use and sensing of such a mater carrier, the appropriate quantity of carriers may be managed and controlled. This allows the line balance to be optimally controlled and maintained, whereby it is possible to facilitate production management and increase production efficiency.

### Industrial Applicability

It is described in the Detailed Description of Invention.

## Claims

1. A cylindrical secondary battery manufacturing device that a carrier, on which a cylindrical secondary battery is mounted, is transferred and circulated in a circulation manufacturing line to manufacture a cylindrical secondary battery, wherein the cylindrical secondary battery manufacturing device is **characterized by** comprising:
a plurality of general carriers introduced into the circulation manufacturing line;
a master carrier distinguished from the general carriers and introduced into the circulation manufacturing line;
a sensor provided at a specific position of the circulation manufacturing line to sense the master carrier;
a positioner provided at a specific position of the circulation manufacturing line and sensing the general carrier to generate a signal; and
a controller counting a quantity of general carriers circulating in the circulation manufacturing line based on the signal generated by the positioner in one cycle from sensing of the master carrier through the sensor to sensing of a next master carrier.

2. The cylindrical secondary battery manufacturing device according to claim 1, **characterized in that**
one master carrier is introduced in the circulation manufacturing line.

3. The cylindrical secondary battery manufacturing device according to claim 1, **characterized by** comprising
an interface for inputting an appropriate quantity of carriers circulating in the circulation manufacturing line.

4. The cylindrical secondary battery manufacturing device according to claim 3, **characterized by** comprising
an alarm generating a notification when the quantity of the counted carriers escapes from the appropriate quantity and a preset error.

5. The cylindrical secondary battery manufacturing device according to claim 3, **characterized by** comprising
an alarm generating a notification when the sensor does not sense the master carrier for a preset time.

6. The cylindrical secondary battery manufacturing device according to claim 1, **characterized in that**
the general carrier and the master carrier have the same shape and size, but are formed to be visually distinguished.

7. The cylindrical secondary battery manufacturing device according to claim 6, **characterized in that**
at least a portion of an outer periphery of the master carrier is formed of a conductive material that an electrical current is conducted upon contact with the sensor.

8. The cylindrical secondary battery manufacturing device according to any one of claims 1 to 7, **characterized by** comprising
process equipment performing a specific process, wherein the circulation manufacturing line comprises an input buffer line in which the input and waiting of carriers introduced into the process equipment are performed, and a discharge buffer line in which the discharge and waiting of carriers discharged from the process equipment are performed.

9. The cylindrical secondary battery manufacturing device according to claim 8, **characterized in that**
the sensor is provided near the input buffer line.

10. The cylindrical secondary battery manufacturing device according to claim 9, **characterized in that**
a defect discharge outlet is provided, through which defective secondary batteries are discharged out of the circulation manufacturing line before the carrier is discharged through the discharge buffer line.

11. The cylindrical secondary battery manufacturing device according to claim 10, **characterized in that**
the defect discharge outlet is provided with an auxiliary sensor sensing the master carrier.

12. The cylindrical secondary battery manufacturing device according to claim 8, **characterized in that**
the process equipment is provided in multiple units, and the input buffer line and the discharge buffer line are provided between the process equipment and the process equipment.

13. A cylindrical secondary battery manufacturing device that a carrier, on which a cylindrical secondary battery is mounted, is transferred and circulated in a circulation manufacturing line to manufacture a cylindrical secondary battery, wherein the cylindrical secondary battery manufacturing device is **characterized by** comprising:
a positioner sensing a plurality of carriers introduced into the circulation manufacturing line to generate a signal;
a sensor sensing a master carrier among the plurality of carriers introduced into the circulation manufacturing line; and
a controller counting a quantity of carriers circulating in the circulation manufacturing line through the positioner in one cycle from sensing of the master carrier through the sensor to sensing of a next master carrier, and determining whether the quantity of carriers circulating in the circulation manufacturing line is appropriate.

14. The cylindrical secondary battery manufacturing device according to claim 13, **characterized in that**
the master carrier has the same shape and size as those of the general carrier, but is visually and materially distinct therefrom.

15. The cylindrical secondary battery manufacturing device according to claim 13, **characterized by** comprising
an auxiliary sensor sensing that the master carrier is discharged to a defect discharge outlet, through which defective secondary batteries are discharged, out of the circulation manufacturing line.

16. The cylindrical secondary battery manufacturing device according to claim 17, **characterized by** comprising:
an interface for inputting an appropriate quantity of carriers circulating in the circulation manufacturing line; and
an alarm generating a notification when the quantity of the counted carriers is out of a preset error from the appropriate quantity.

17. A cylindrical secondary battery manufacturing method comprising:
a step of sensing a master carrier in a circulation manufacturing line through a sensor to start one cycle;
a step of sensing and counting carriers in the circulation manufacturing line through a positioner;
a step of re-sensing the master carrier in the circulation manufacturing line to end one cycle, and determining whether the quantity of carriers counted per cycle is appropriate; and
a notification step performed when the quantity of carriers is abnormal.

18. The cylindrical secondary battery manufacturing method according to claim 17, **characterized by** comprising
a step of counting the quantity of carriers discharged out of the circulation manufacturing line through an auxiliary positioner, wherein the quantity of carriers counted per cycle is calculated by deducting the quantity of the discharged carriers.

19. The cylindrical secondary battery manufacturing method according to claim 17, **characterized by** comprising
a step of sensing the master carrier discharged out of the circulation manufacturing line through an auxiliary sensor and performing a notification.

20. The cylindrical secondary battery manufacturing method according to claim 17, **characterized by** comprising
a step of performing a separation notification of the master carrier when the master carrier is not re-sensed within a preset time in the circulation manufacturing line.
